(19) Europäisches Patentamt
European Patent Office
Office européen des brevets

(11) EP 3 131 295 A1

(12) EUROPEAN PATENT APPLICATION

(43) Date of publication:
15.02.2017 Bulletin 2017/07

(51) Int Cl.:
H04N 19/56 (2014.01)     H04N 19/513 (2014.01)

(21) Application number: 15181035.5

(22) Date of filing: 14.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Axis AB
223 69 Lund (SE)

(72) Inventors:
• Linse, Hampus
  224 72 Lund (SE)

• Pihl, Fredrik
  217 57 Malmö (SE)
• Persson, Lars
  211 13 Malmö (SE)
• Andersson, Viktor
  223 54 Lund (SE)
• Danielsson Fan, Xing
  224 74 Lund (SE)
• Martins, Alexandre
  212 18 Malmö (SE)

(74) Representative: Awapatent AB
P.O. Box 1066
251 10 Helsingborg (SE)

(54) **VIDEO ENCODING METHOD AND SYSTEM**

(57)     A method of encoding video image frames using inter-frame video compression is disclosed. The image frames are captured by an image sensor and comprise a plurality of pixels grouped into blocks. A current image frame is received, as well as information representative of a movement of the image sensor between capture of a previously decoded image frame to be used as a reference frame and capture of the current image frame. For a first block in the current image frame, a search is made in the reference frame for a reference block similar to the first block, using a predetermined search pattern. If the movement of the image sensor is above a threshold, a starting position of the search is displaced corresponding to the movement. If a similar reference block is found, a motion vector indicative of a difference in location of the reference block in the nearby image frame and the first block in the current image frame is calculated, and the first block is encoded as an inter-coded block using the motion vector.

Fig. 6

Printed by Jouve, 75001 PARIS (FR)

## Description

Technical field

The present invention relates to the field of video compression, and more particularly to inter-frame video compression.

Background

In digital video systems, such as network camera monitoring systems, video sequences are compressed before transmission using various video encoding methods. In many digital video encoding systems, two main modes are used for compressing video frames of a sequence of video frames: intra mode and inter mode. In the intra mode, the luminance and chrominance channels are encoded by exploiting the spatial redundancy of the pixels in a given channel of a single frame via prediction, transform, and entropy coding. The encoded frames are called intra-frames, and may also be referred to as I-frames. Within an intra-frame, blocks of pixels, also referred to as macroblocks, are encoded in intra-mode, meaning that they are encoded with reference to a similar block within the same image frame, or raw coded with no reference at all. The inter mode instead exploits the temporal redundancy between separate frames, and relies on a motion-compensation prediction technique that predicts parts of a frame from one or more previous frames by encoding the motion in pixels from one frame to another for selected blocks of pixels. The encoded frames are called inter-frames, and may be referred to as P-frames (forward-predicted frames), which can refer to previous frames in decoding order, or B-frames (bi-directionally predicted frames), which can refer to two or more previously decoded frames, and can have any arbitrary display-order relationship of the frames used for the prediction. Within an inter-frame, blocks of pixels, also referred to as macroblocks, may be encoded either in inter-mode, meaning that they are encoded with reference to a similar block in a temporally nearby image (a previously decoded image, as will be discussed later), or in intra-mode, meaning that they are encoded with reference to a similar block within the same image frame, or raw-coded with no reference at all.

Inter-frames generally require less bits for representing an image than intra-frames. Similarly, inter-coded blocks of an inter-frame require less bits than intra-coded blocks. In an interest of saving storage space and transmission bandwidth it is therefore beneficial to use inter-frames, and to use few intra-coded blocks in the inter-frames. However, when there is movement in the captured scene intra-frames become necessary, since there is not enough similarity between successive image frames for inter-frame coding to be efficient. If inter-frame coding is used when there is movement in the scene, many blocks will need to be intra-coded. When the camera capturing the image frames is moving, either in a desired pan, tilt or zoom operation, or in an undesired shaking movement, the image will be changing to such an extent that the encoding process will be more likely to encode blocks in inter-frames as intra-coded blocks, or to encode the images as intra-frames, i.e. with intra-coded blocks only. This leads to bigger image files, requiring more bandwidth and storage capacity. It would be desirable to be able to reduce the number of bits required for representing image frames, without unnecessarily sacrificing image quality, also when the camera capturing the image frames is moving.

Summary of the invention

It is an object of the present invention to provide a method of encoding video image frames which requires less bits for representing images.
It is also an object of the invention to provide a method of encoding video image frames using inter-frame video compression which reduces requirements on bandwidth and storage when an image sensor capturing the video image frames is moving.
A further object is to provide an encoding system which enables reduced requirements on bandwidth and storage for images captured by a moving image sensor.
Another object of the invention is to provide a computer program product which enables encoding of video image frames at efficient bit rates also when the image sensor is moving.
According to a first aspect, these objects are achieved, in full or at least in part, by a method of encoding video image frames using inter-frame video compression, said image frames being captured by an image sensor and comprising a plurality of pixels grouped into blocks, the method comprising: receiving information representative of pixels in a current image frame, receiving information representative of a movement of the image sensor between a time of capture of a previously decoded image frame to be used as a reference frame in said inter-frame video compression and a time of capture of said current image frame, for a first block in the current image frame, searching in said reference frame for a reference block that is similar to said first block using a predetermined search pattern, wherein if said movement is above a predetermined threshold, a starting position of the search is displaced corresponding to said movement, the method further comprising: if a reference block that is similar to said first block is found, calculating a motion vector indicative of a difference in location of the reference block in the previously decoded image frame and the first block in the current image frame, and encoding said first block as an inter-coded block using said motion vector, and if a reference block that is similar to said first block is not found, encoding said first block as an intra-coded block, and repeating said search, calculation of motion vector and encoding for other blocks in said current image frame, thereby encoding said current image frame as an inter-frame. Also for the other blocks in the current image frame, the starting position of the search is displaced. In this manner, the likelihood of finding a similar block may be increased, since the search for a similar block is started at a more suitable position than would be the case if the movement had not been taken into account. Thereby, the probability that the block is encoded as an inter-coded block, and not an intra-coded block, is increased. Further, even if a reasonably similar block could have been found even with a starting point that is not chosen taking account of movement of the image sensor, it may be possible to find a better match if a more suitable starting point is used, such that a residual representing a difference between the block to be encoded and the reference block is smaller, leading to a lower bitrate.

It may be noted that references to "a time of capture of an image frame" may refer to the time of capture of the image frame as a whole, as well as the time of capture of part of the image frame, as will be discussed further below.

A decision of whether a block in the reference frame is similar to the block to be encoded may be made in various ways known per se.

The term "inter-frame video compression" means any of a number of video compression algorithms in which image frames in a video sequence are, where possible, encoded with reference to other image frames in the video sequence. The inter-frame encoding may be done using motion estimation and motion compensation, in which a current block in a current image frame is encoded with reference to a reference block in a reference frame using a motion vector indicative of how much the position of the current block in the current image frame is displaced compared to the position of the reference block in the reference frame.

The search for a similar block is generally done using a predetermined search pattern. Different codecs or compression algorithms may use different search patterns. The search may be started in a position in the reference frame corresponding to the position of the block to encode in the current image frame. If the block where the search is started is not similar enough to the block to encode, as judged using a predetermined similarity threshold, the search continues to the next block according to the search pattern until a sufficiently similar block is found or until the end of the search pattern is reached. If no similar block is found in the reference frame, the block in the current image frame is encoded as an intra-coded block. If, on the other hand, a similar block is found in the reference frame, that block is used as reference block. A motion vector indicating the difference in position is calculated and the block is encoded as an inter-coded block.

The previously decoded image frame may be a previously captured image frame. When encoding the first block, it will thus be encoded as a P-block. P-blocks may be used in P-frames, as well as in B-frames.

According to a variant, the previously decoded image frame may be a later captured image frame, which has been previously encoded and decoded for use as the reference frame. When encoding the first block, it will thus be encoded as a B-block. B-blocks may be used in B-frames, but not in P-frames.

The predetermined search pattern may be chosen from the group consisting of three step search, four step search, exhaustive search, binary search, diamond search, spiral search, two dimensional logarithmic search, orthogonal search, one at a time search, cross search, adaptive rood pattern search, hierarchical search and spatially dependent search.

The information representative of a movement of the image sensor may be provided by a pan, tilt and/or zoom controller controlling movement of said image sensor. In this manner, intentional movement of the image sensor may be accounted for. It may here be noted, that zooming does not in itself imply a movement of the image sensor. However, for purposes of encoding images, zooming will induce changes in the captured images analogous to actual movement of the image sensor. Therefore, in the context of this application, a zoom operation will be seen as equivalent to a movement of the image sensor.

The information representative of a movement of the image sensor may additionally or alternatively be provided by a motion sensor. Thereby, undesired movement caused by shaking may be taken into account. Information from the motion sensor may also be used for providing information on pan, tilt and/or zoom operations.

In a variant of the method, a rolling shutter is used for capturing said current image frame, and said information representative of a movement of the image sensor is representative of a movement of the image sensor between capture of a first area of said current image frame and capture of a corresponding area of the reference frame, said first block being located in said first area. In this manner, movement of the image sensor may be taken into account, even if the movement is not the same for the entire image frame.

According to a second aspect, the above-mentioned objects are achieved, in full or at least in part, by a digital video encoder system for encoding image data corresponding to input image frames captured by an image sensor, the system comprising: an encoder module arranged to process input image frames using inter-frame video compression, wherein a current image frame is encoded with reference to a previously decoded image frame used as a reference frame, a block matching module arranged to search in said reference frame for a reference block that is similar to a first block in said current image frame using a predetermined search pattern, a motion estimation module arranged to calculate a motion vector indicative of a difference in location of the reference block in the reference frame and the first block in the current image frame if a similar block is found by the block matching module, and a movement determination module arranged to provide information representative of a movement of the image sensor between a time of capture of the previously decoded image frame and a time of capture of the current image frame, wherein said block matching module is arranged to displace a starting position of the search corresponding to said movement if said movement is above a predetermined threshold. By means of such an encoding system, it may be possible to increase the probability of encoding inter-coded blocks rather than intra-coded blocks, thereby reducing the number of bits required for representing the image frame. Further, the residual may be reduced when encoding inter-coded blocks, also contributing to a lower bitrate.

The skilled person will realise that although the encoder module is arranged to process input image frames using inter-frame video compression, it need not encode all input image frames using inter-frame video compression, but may encode some input image frames using intra-mode encoding.

The video encoding system of the second aspect may generally be embodied in the same ways as the method of the first aspect, with accompanying advantages.

According to a third aspect, the abovementioned objects are achieved, in full or at least in part, by a camera comprising a video encoding system according to the second aspect.

According to a fourth aspect, the abovementioned objects are achieved, in full or at least in part, by a computer program product comprising a computer-readable storage medium with instructions adapted to carry out the method according to the first aspect when executed by a processor. The processor may be any kind of processor, e.g., a central processing unit (CPU), a graphics processing unit (GPU), a custom made processing device implemented in an integrated circuit, an ASIC, an FPGA, or logical circuitry including discrete components.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, a reference to "an object" or "the object" may include several objects, and the like. Furthermore, the word "comprising" does not exclude other elements or steps.

Brief description of the drawings

The invention will now be described in more detail by way of example and with reference to the accompanying schematic drawings, in which:

Fig. 1 is an illustration of an image frame made up of a plurality of pixels grouped in blocks,
Fig. 2 is an illustration of a video sequence comprising a plurality of successive image frames,
Fig. 3 is an illustration of part of an image frame indicating a block to be encoded, and a reference image indicating a reference block,
Fig. 4 is an illustration of the reference image of Fig. 3 indicating a search pattern for searching for a reference block,
Fig. 5 is an illustration similar to Fig. 4, but indicating a displacement of a starting position of the search based on motion of the image sensor,
Fig. 6 is a flow chart illustrating the method of the invention according to one variant thereof,
Fig. 7 is a block diagram of an embodiment of a video encoding system, and
Fig. 8 shows a camera with an integrated video encoding system.

Detailed description of embodiments

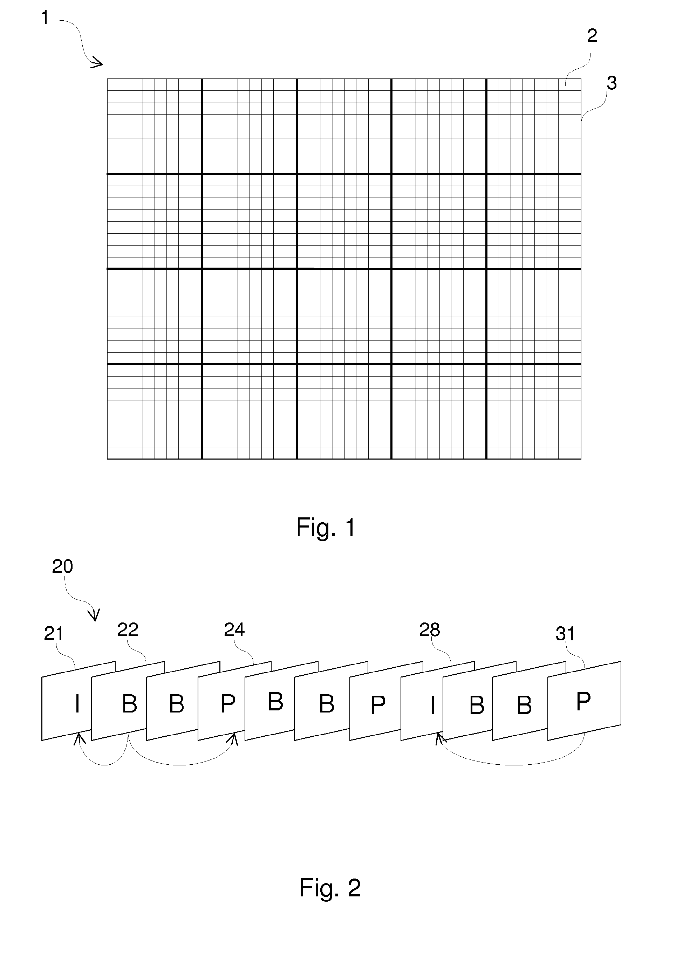

In Fig. 1, an image frame 1 is shown. The image frame 1 is made up of a plurality of pixels 2. The image frame 1 may, e.g., be made up of 1280 x 960 pixels, but for reasons of clarity, only a reduced number of pixels 2 are shown in the drawings. The pixels 2 are grouped in blocks 3. Here, the blocks 3 are shown as being made up of 8 x 8 pixels, i.e. each containing 64 pixels.

When a sequence of image frames is encoded for transmission and/or storage, it may, as discussed in the background section, be encoded as intra-frames and inter-frames. Fig. 2 shows a schematic example of an encoded video sequence 20. A first image frame 21 is encoded as an intra-frame, also referred to as an I-frame. This frame does not make reference to any other frames. Instead, blocks are encoded only with reference to blocks in the same frame. Thus, an I-frame can be used as a starting point when displaying the video sequence.

The second image 22 in the video sequence 20 is encoded as an inter-frame, namely a B-frame. As indicated by arrows, this B-frame 22 is encoded with reference to the preceding I-frame 21, but also to a later captured frame, the fourth frame 24 in the video sequence 20. It may be noted that because any frame with reference to which an inter-frame is encoded has to be encoded and decoded before it can be used as a reference frame, the use of B-frames may introduce latency, since a later captured image frame needs to be encoded and decoded before a B-frame is encoded.

The video sequence 20 shown is encoded with a predetermined succession of I-frame, B-frames, and P-frames. When a group of pictures, or GOP, started with an I-frame followed by a number of inter-frames, is finished, a new GOP is started with a new I-frame, such as the eighth frame 28 in Fig. 2. As indicated by an arrow, an eleventh frame 31 is encoded as a P-frame with reference to the preceding I-frame 28.

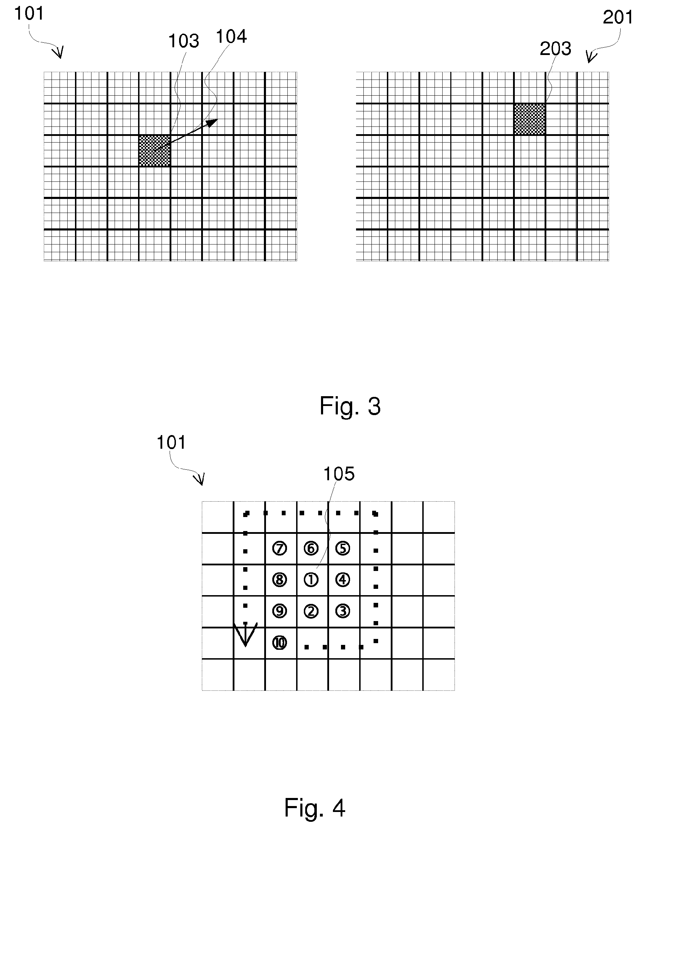

When encoding a current image frame as an inter-frame, such as a B-frame or a P-frame, for each block in the current image frame a search is made for a similar block in a reference frame. The reference frame is obtained by encoding and decoding another image frame. In the case of encoding a P-frame, the other image frame is a previously captured image frame, whereas for a B-frame, the other image frame may be either a previously captured image frame or a later captured image frame. In either case, the other image frame to be used as reference frame is decoded before the current image frame can be encoded. The image frame to be used as reference frame will also be discussed as a previously decoded image frame. This will be explained further referring to Figs. 3 and 4. The previously decoded image frame may be a temporally nearby image frame. Some compression formats may allow using a long term reference for inter-frame encoding, the previously decoded image frame thus not strictly being temporally nearby.

In Fig. 3, a reference frame 101 is shown, as well as a current image frame 201. When a block 203 in the current image frame 201 is to be encoded as an inter-coded block, a similar block in the reference frame 101 is used as reference block 103.

It should be pointed out that in order not to overload the drawings, the reference frame 101 and the current image frame 201 are shown with a reduced number of pixels grouped into blocks of only 4 x 4 pixels.

As may be seen in Fig. 3, the reference block 103 is not located in the same position in the reference frame 101 as the block 203 to be encoded in the current image frame 201. In this example, the block 203 in the current image frame 201 is located in the second row and the sixth column of blocks in the current image frame 201, and the reference block 103 is located in the third row and the fourth column of blocks in the reference image 101. The difference in position of the block 203 to encode in the current image frame 201 and the reference block 103 in the reference frame 101 may be due to actual movement of an object in the captured scene. It may, however, also be due to other reasons, such as a previously obscured area of the background being exposed by the movement of a blocking object, and changes in lighting of the captured scene. When encoding the block 203 in the current image frame 201 a motion vector 104 is used for indicating the difference in position. This motion vector 104 indicates how much the block has "moved" between the reference frame 101 and the current image frame 201. Further, any differences in chrominance and luminance between the block 203 in the current image frame 201 and the reference block 103 in the reference frame 101 are computed and included in the data representing the encoded block 203 as a residual.

Turning now to Fig. 4, the principles of the search for a similar block will be discussed. Here, the reference frame 101 is once more shown, but further simplified, such that only the blocks are indicated, and not the pixels. When a block in a current image frame is to be encoded, a search for a similar block in the reference frame 101 is generally started in a position in the reference frame 101 which corresponds to the position of the block to encode in the current image frame. Thus, if, for instance, a block in the third row and the fourth column of blocks in the current image frame is to be encoded, the search for a similar block is started in the third row and the fourth column of blocks in the reference frame 101. In Fig. 4, the starting position 105 of the search is indicated by ①. For a block in the reference frame to be considered similar enough to the block to be encoded in the current image to be used as reference block, the difference between the block in the current image frame and the potential block in the reference frame has to be below a predetermined similarity threshold. The difference may, e.g., be expressed as a sum of absolute differences, SAD. The SAD is calculated by taking the absolute difference between a pixel in the current image frame and a corresponding pixel in a compared block in the reference frame and calculating a sum of all such differences for all pixels in the block. Thus, the SAD may be expressed as follows:

$$SAD = \sum_{n=1}^{N} |V_{c,n} - V_{r,n}|.$$

Here, N is the number of pixels in the studied block, $V_{c,n}$ is the pixel value of pixel n in the current image frame, and $V_{r,n}$ is the pixel value of the corresponding pixel n in the reference frame.

If the block where the search is started is considered similar to the block to be encoded, this first block is used as reference block, and a motion vector is calculated as discussed above.

If, on the other hand, the block where the search is started differs too much from the block to be encoded, i.e. if the SAD is above the predetermined threshold, the search continues to another block. Which block to continue to is determined by a search pattern used for the search. There are many possible search patterns, and in this example a spiral search pattern is used. In Fig. 4, the second block of the search pattern is indicated by ②. If the second block of the search pattern is considered similar, it is used as reference block. Otherwise, the search continues to the next block, as indicated by the symbols ③, ④, ⑤, ⑥, ⑦, ⑧, ⑨, ⑩, and so on as indicated by the spiralling dotted arrow. As soon as a similar block is found, the search is discontinued, and the similar block is used as reference block. The maximum length of the search may be set, e.g., as a number of rows or columns of blocks. If the maximum length of the search is reached without finding a similar block, the block in the current image frame is encoded as an intra-coded block, i.e. an I-block, since this will generally be more bit efficient than encoding it as a P-block with a large residual. Searching and encoding is repeated in this manner for all blocks in the current image.

If the image sensor capturing the video sequence moves during capture there will generally be changes in the entire image, as if the entire scene captured by the image sensor had moved or changed. This implies that a block representing a certain part of the captured scene in one image frame will move to another position in a subsequent image frame. This may in turn lead to longer searches, requiring more processing capacity, and to longer motion vectors calculated for encoding P-blocks. It may also lead to larger residuals, because a similar block may be found in the reference image which does not represent the same part of the captured scene as the block to encode, but which is similar enough to have a difference below the predetermined similarity threshold. There may be another block further away from the start of the search that would be more similar, i.e. having a lower SAD, but since the search is discontinued once a block with a difference below the predetermined similarity threshold is found, the block with lower SAD will not be found. Movement of the image sensor also increases the likelihood of having to encode a block as an I-block, because if the movement is large enough to correspond to more than the maximum length of the search, there may very well be a similar block in the reference frame, but the search will have been discontinued before that similar block is found. Consequently, movement of the image sensor, or a camera comprising the image sensor, may result in longer time needed for searching for a similar block, and higher bitrate because of larger residuals and a larger proportion of I-blocks.

The inventors have realised that this may be dealt with by taking account of the movement of the image sensor when performing the search for a similar block. If the movement is known, either because it is a planned or desired movement, such as a panning, tilting or zooming operation, or because an undesired movement, such as vibration or shaking, has been measured, the start of the search may be displaced.

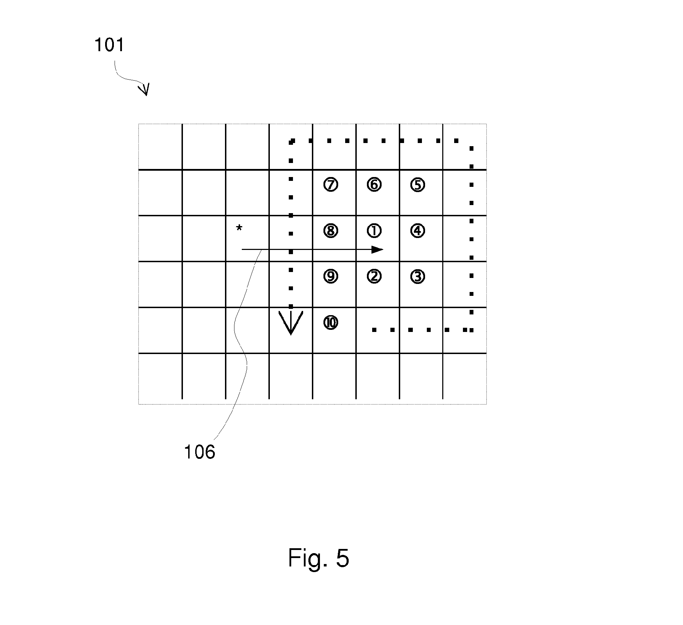

Referring now to Fig. 5, the block marked by an asterisk is the block whose position in the reference frame 101 corresponds to a position of the block to encode in the current image frame. However, between capture of the reference frame 101 and the current image frame, the image sensor capturing the images has moved to the right. As already mentioned, this movement may be a desired movement or an undesired movement. By using information about this movement, or more precisely the distance and direction of the movement, a displaced start of the search pattern may be calculated. This is based on the fact that if the image sensor has moved, a similar block is more likely to be found in a position in the reference frame which is displaced corresponding to the movement. Just as an example, if the sensor has moved diagonally upwards to the left, a similar block is more likely to be found correspondingly higher up and more to the left in the reference frame than the position corresponding to the position of the block to be encoded in the current image frame.

In order to account for the movement of the image sensor, the start of the search is displaced to the right from the position marked by the asterisk as indicated by the displacement arrow 106. In this position, marked by ①, the search is started and follows a spiral pattern as described before in connection with Fig. 4, until a similar block is found, or until the end of the search pattern is reached. In this manner, finding a similar block may be quicker, and the likelihood of finding a similar block before the end of the search pattern may be increased. Further, the chances of finding a good match in the reference frame are increased, such that the residual to encode may be reduced.

The movement of the image sensor may have various causes. For instance, a camera or other device comprising the image sensor may be intentionally moved in a panning and/or tilting operation, or an intentional zooming operation may be performed. In the following, such operations will be referred to as PTZ operations. It should be noted that such PTZ operations may include only one, a pair, or all three of panning, tilting, and zooming. A controller controlling the PTZ operations may advantageously provide the information about the movement, since such a controller will anyway have to use such information for controlling the PTZ operations.

Further, the movement of the image sensor may be unintentional, such as caused by vibrations. For instance, a camera or other device comprising the image sensor may be vibrated or shaken by wind or passing traffic. Unintentional movement may be measured by a motion sensor, such as an accelerometer, and information thereby provided may be used for displacing the start of the search for a similar block in the reference frame. It should be noted that a motion sensor may also be used for providing information on intentional movement.

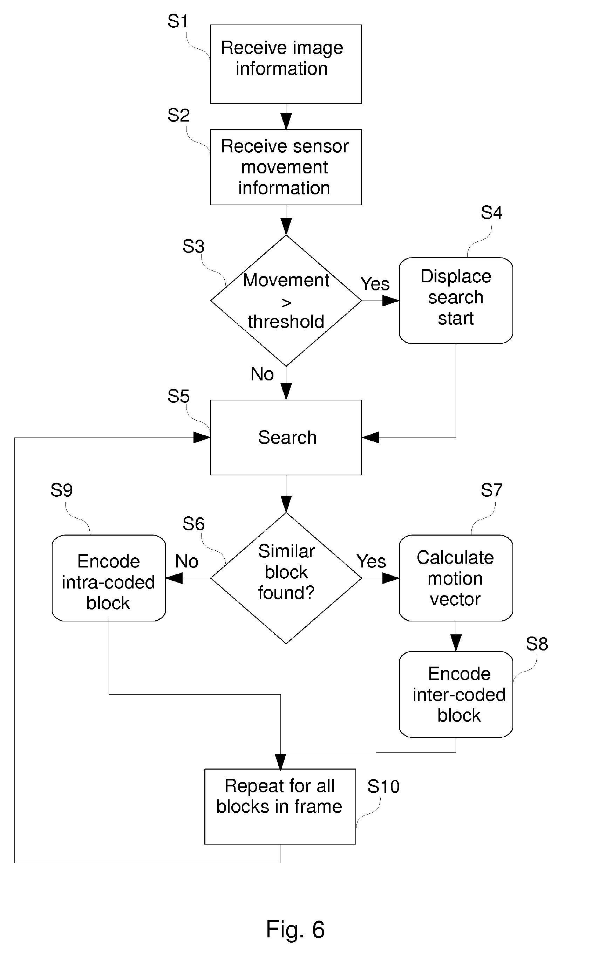

A variant of the inventive method may also be described with reference to Fig. 6, which is a flow chart showing steps of the method. Information representative of pixels in a current image frame is received (step S1). The current image frame is to be encoded using inter-frame video compression. Thus, another image frame, which has been previously encoded and decoded, is to be used as a reference frame. Information representative of a movement of the image sensor is received (step S2). This movement is movement that has occurred between a time of capture of the previously decoded image frame and a time of capture of said current image frame.

It is checked if the movement is above a predetermined threshold (step S3), and if so a starting position of a search for a reference block candidate is displaced (step S4) corresponding to the movement of the image sensor. If the image sensor has not moved, or has moved less than the predetermined threshold, the starting position of the search is not displaced.

For a first block in the current image frame, a search is made (step S5) in said reference frame for a reference block that is similar to the first block using a predetermined search pattern.

During the search, blocks in the reference frame are successively compared to the first block. If a reference block that is similar to said first block is found (step S6), a motion vector is calculated (step S7) indicative of a difference in location of the reference block in the reference frame and the first block in the current image frame. The first block is encoded as an inter-coded block using the motion vector (step S8).

If no reference block that is similar to the first block is found (S6), the first block is encoded as an intra-coded block (step S9)

The search, calculation of motion vector, and encoding is repeated (step S10) for all blocks in the current image frame, thereby encoding said current image frame as an inter-frame. This process is then repeated for successive frames in the video sequence.

It should be noted that thus far, the movement of the image sensor has been assumed to be the same for an entire image frame, such that the same displacement of the starting position of the search is done for all blocks of one image frame. Strictly, this is true only if a global shutter is used, whereby all pixels of the image sensor are read out simultaneously. A global shutter corresponds to the mechanical shutter of a traditional photographic film camera. In digital cameras, a global shutter is oftentimes used with CCD sensors. However, many digital cameras employ a so called rolling shutter, whereby the pixels are read out one row at a time, or even one or a few pixels at a time. This leads to different parts of a captured image being read out at different times, and thus representing the captured scene at slightly different times. Therefore, movement of the image sensor may occur between reading out different parts of the image frame. A rolling shutter is oftentimes used with CMOS sensors.

In order to account for the effect of a rolling shutter, the method described above may be modified in that for each block to encode a respective movement of the image sensor is determined. If the information representative of movement of the image sensor may be determined and provided with sufficient temporal resolution, each row or column of blocks or even each block may be given its one displacement of the starting position of the search pattern. If the information representative of movement of the image sensor cannot be obtained with such high resolution, a number of consecutively read-out rows or blocks may be attributed with the same information representative of movement of the image sensor, thus using the same displacement of the starting position of the search.

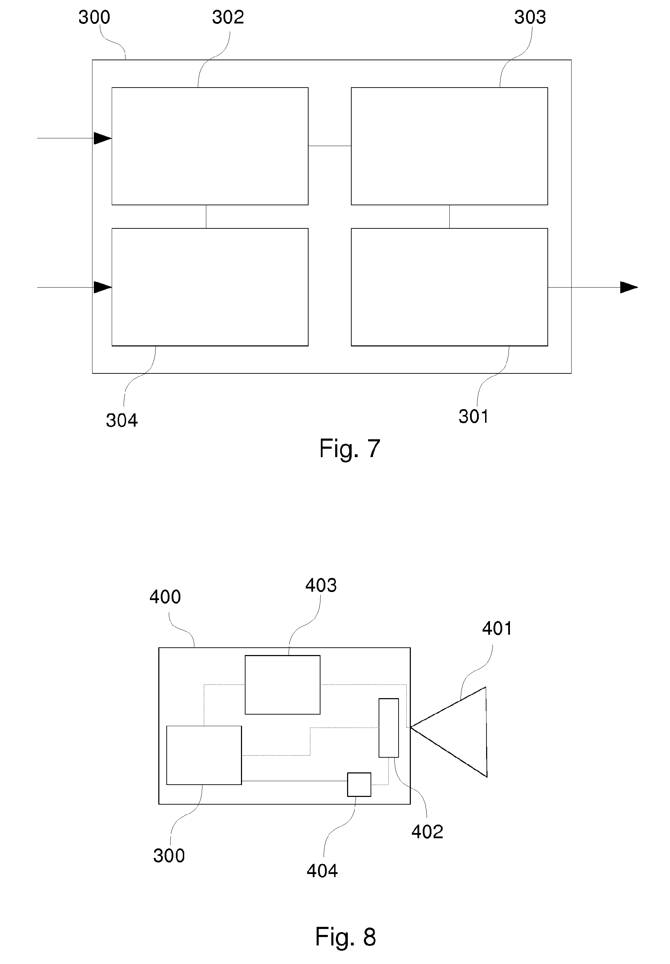

With reference to Fig. 7, an embodiment of a digital video encoder system 300 will be described. The encoder system 300 has an encoder module 301, which is arranged to process input image frames using inter-frame video compression. As already discussed, this means that a current image frame is encoded with reference to a previously decoded image frame used as a reference frame, where possible.

In order to be able to perform the inter-frame video compression, the encoder system 300 has a block matching module 302 arranged to search in the reference frame for a reference block that is similar to a first block in the current image frame. As described in connection with Figs. 4 and 5, the search is performed using a predetermined search pattern.

The encoder system 300 further has a motion estimation module 303, which is arranged to calculate a motion vector indicative of a difference in location of the reference block in the reference frame and the first block in the current image frame. Such a motion vector is calculated if a similar block is found by the block matching module, but not if no similar block is found.

A movement determination module 304 of the encoder system 300 is arranged to determine a movement of the image sensor between a time of capture of the previously decoded image frame and a time of capture of the current image frame and to provide information representative of this movement. The block matching module 302 is arranged to displace a starting position of the search corresponding to the movement if the movement is above a predetermined threshold. If the movement is equal to or below the threshold, the starting position of the search is not displaced.

The encoder system 300 may be integrated in a camera 400 or other image capturing device comprising an image sensor. Alternatively, the encoder system may be separate and operatively connected to a camera or other image capturing device. Here, the camera 400 is shown in a highly simplified illustration, only showing components relevant for the explanation of the invention. The camera 400 has optics 401 for gathering light from the scene to be captured, and an image sensor 402 for capturing images of the scene. Further, the camera 400 has a PTZ controller 403 for controlling panning, tilting and zooming. The PTZ controller 403 is arranged to provide information on PTZ operations to the encoder system 300, such that the search for a reference block may be improved as described above. Additionally, the camera 400 has a motion sensor 404 for sensing movement of the camera, and more precisely movement of the image sensor 402. Similar to the PTZ controller 403, the motion sensor is arranged to provide information on movement to the encoder system 300.

It will be appreciated that a person skilled in the art can modify the above described embodiments in many ways and still use the advantages of the invention as shown in the embodiments above. As an example, the search for a similar block has above been described using a spiral search pattern. However, the invention is equally applicable to any other search pattern, such as three step search, four step search, exhaustive search, binary search, diamond search, two dimensional logarithmic search, orthogonal search, one at a time search, cross search, adaptive rood pattern search, hierarchical search or spatially dependent search. Variants of spiral search patterns may be used, such as a golden spiral pattern or a Fibonacci spiral pattern.

The decision of whether a block in the reference frame is similar enough to the block to encode is in the example above based on an SAD threshold. Still, this is only an example, and the similarity decision may be made according to other methods known in the art.

The image frames have been described as having 1280 x 960 pixels, but any number of pixels may be used. The number of pixels per block is also not limited to the example of 8 x 8 pixels. More or fewer pixels may be grouped into blocks. Further, all blocks in the image frame need not have the same number of pixels. For instance, some blocks may be made up of 32 x 32 pixels, and others of 16 x 16 pixels. The blocks need not necessarily be square. As already mentioned, the blocks may also be referred to as macroblocks.

In connection with Fig. 5, the movement of the image sensor has been described as a lateral movement, but the movement may be in any direction, such as vertical or diagonal. It should also be borne in mind that the sensor may move in any spatial direction, but the resulting movement in the images will be in the two-dimensional plane of the images. Hence, the displacement of the starting position will also be in the two-dimensional plane.

As already discussed, the movement may be a desired movement or an undesired movement. Desired movements may, e.g., be controlled using an input device such as a joystick. Desired movements may also be planned and pre-programmed as so called guard tours. Undesired movements may, e.g., be vibrations caused by wind or traffic, or by insufficient fixing of the camera.

In connection with Fig. 8, the PTZ controller is described as one common controller for panning, tilting and zooming. However, it may as well be made up of separate controllers for each of panning, tilting and zooming, respectively.

The predetermined threshold against which the information representative of movement of the image sensor is compared may be pre-programmed or set by user input.

The encoder system may be embodied as software, firmware, hardware, or a combination thereof.

The invention is applicable to any block based hybrid codecs, e.g., a H.264, H.265, MPEG-4 Part 2, or VP9 codec.

In the video sequence shown in Fig. 2, the inter-frames are P-frames or B-frames. It should be understood that the invention is equally applicable to encoding video sequences using only P-frames as the inter-frames, and no B-frames. As mentioned before, it may be desirable to avoid B-frames as they may cause latency.

In the examples above, the invention is described in connection with a camera. The camera may be a monitoring camera. Further, the camera may be any type of camera, e.g., a camera employing visible light, an IR camera or a thermal camera. The camera may be a digital camera, but the invention may also be used with analog cameras. In such case, images from an analog camera may be converted to digital format using a digitalization unit.

Instead of in a camera, the image sensor capturing the image frames may be arranged in another type of image capturing device.

The images may also be generated by a visual light sensor, a thermal sensor, a time-of-flight sensor, or other types of image generating sensors capable of generating information representative of pixels to be encoded using inter-frame video compression technologies.

Thus, the invention should not be limited to the shown embodiments but should only be defined by the appended claims.

**Claims**

1. A method of encoding video image frames using inter-frame video compression, said image frames being captured by an image sensor and comprising a plurality of pixels grouped into blocks, the method comprising:

receiving (S1) information representative of pixels in a current image frame (201),
receiving (S2) information representative of a movement of the image sensor between a time of capture of a previously decoded image frame to be used as a reference frame (101) in said inter-frame video compression and a time of capture of said current image frame (201),
for a first block (203) in the current image frame (201), searching (S5) in said reference frame (101) for a reference block (103) that is similar to said first block (203), said search being performed using a predetermined search pattern, wherein if said movement is above a predetermined threshold, a starting position (105) of the search is displaced (S4) corresponding to said movement,
the method further comprising:

if a reference block (103) that is similar to said first block (203) is found, calculating (S7) a motion vector (104) indicative of a difference in location of the reference block in the reference frame (101) and the first block (203) in the current image frame (201), and

encoding (S8) said first block (203) as an inter-coded block using said motion vector (104), and

if a reference block that is similar to said first block (203) is not found, encoding (S9) said first block (203) as an intra-coded block, and repeating (S10) said search (S5), calculation of motion vector (S7) and encoding (S8, S9) for other blocks in said current image frame (201), thereby encoding said current image frame (201) as an inter-frame.

2. The method according to claim 1, wherein said previously decoded image frame is a previously captured image frame.

3. The method according to claim 1, wherein said previously decoded image frame is a later captured image frame, which has been previously encoded and decoded for use as the reference frame (101).

4. The method according to any one of claims 1-3, wherein the predetermined search pattern is chosen from the group consisting of three step search, four step search, exhaustive search, binary search, diamond search, spiral search, two dimensional logarithmic search, orthogonal search, one at a time search, cross search, adaptive rood pattern search, hierarchical search and spatially dependent search.

5. The method according to any one of the preceding claims, wherein said information representative of a movement of the image sensor is provided by a pan, tilt and/or zoom controller controlling movement of said image sensor.

6. The method according to any one of the preceding claims, wherein said information representative of a movement of the image sensor is provided by a motion sensor.

7. The method according to any one of the preceding claims, wherein a rolling shutter is used for capturing said current image frame, and wherein said information representative of a movement of the image sensor is representative of a movement of the image sensor between capture of a first area of said current image frame and capture of a corresponding area of the reference frame, said first block being located in said first area.

8. A digital video encoder system for encoding image data corresponding to input image frames captured by an image sensor, the system comprising:

an encoder module arranged to process input image frames using inter-frame video compression, wherein a current image frame is encoded with reference to a previously decoded image frame used as a reference frame,

a block matching module arranged to search in said reference frame for a reference block that is similar to a first block in said current image frame using a predetermined search pattern,

a motion estimation module arranged to calculate a motion vector indicative of a difference in location of the reference block in the reference frame and the first block in the current image frame if a similar block is found by the block matching module, and

a movement determination module arranged to provide information representative of a movement of the image sensor between a time of capture of the previously decoded image frame and a time of capture of the current image frame, wherein said block matching module is arranged to displace a starting position of the search corresponding to said movement if said movement is above a predetermined threshold.

9. A camera comprising a digital video encoder system according to claim 8.

10. A computer program product comprising a computer-readable storage medium with instructions adapted to carry out the method according to any one of claims 1-7 when executed by a processor.

Fig. 1

Fig. 2

101

103  104

201

203

Fig. 3

101

105

Fig. 4

101

106

Fig. 5

Fig. 6

Fig. 7

Fig. 8

Europäisches
Patentamt

European
Patent Office

Office européen
des brevets

# EUROPEAN SEARCH REPORT

Application Number

EP 15 18 1035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/213662 A1 (OWENS JAMES [US] ET AL) 29 September 2005 (2005-09-29) * paragraphs [0001] - [0037] * ----- | 1-10 | INV. H04N19/56 H04N19/513 |
| X | EP 1 921 867 A1 (HARMAN BECKER AUTOMOTIVE SYS [DE]) 14 May 2008 (2008-05-14) * paragraph [0053]; figure 6 * * claim 8 * ----- | 1-10 | |

TECHNICAL FIELDS
SEARCHED      (IPC)

H04N

The present search report has been drawn up for all claims

| Place of search | Date of completion of the search | Examiner |
|---|---|---|
| Munich | 30 November 2015 | Di Cagno, Gianluca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

&  : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 18 1035

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2015

| Patent document cited in search report | | Publication date | Patent family member(s) | | Publication date |
|---|---|---|---|---|---|
| US 2005213662 | A1 | 29-09-2005 | JP 2005287031 A<br>US 2005213662 A1 | | 13-10-2005<br>29-09-2005 |
| EP 1921867 | A1 | 14-05-2008 | CA 2605320 A1<br>CN 101166276 A<br>EP 1921867 A1<br>JP 5204458 B2<br>JP 2008104181 A<br>KR 20080034784 A<br>US 2008187047 A1 | | 17-04-2008<br>23-04-2008<br>14-05-2008<br>05-06-2013<br>01-05-2008<br>22-04-2008<br>07-08-2008 |

EPO FORM P0459

For more details about this annex : see Official Journal of the European Patent Office, No. 12/82